# EUROPÄISCHE PATENTSCHRIFT

(11) **EP 4 187 133 B1**
(45) Veröffentlichungstag und Bekanntmachung des Hinweises auf die Patenterteilung: **27.08.2025**
(21) Anmeldenummer: 22197127.8
(22) Anmeldetag: 22.09.2022
(51) Int. Cl.: F16K 1/42, F16K 25/00

(54) **VENTIL**
VALVE
SOUPAPE

(30) Priorität: 24.11.2021 DE 102021130841
(43) Veröffentlichungstag der Anmeldung: 31.05.2023
(73) Patentinhaber: Leinemann GmbH & Co. KG, 38110 Braunschweig (DE)
(72) Erfinder: Kosmehl, Ralf, 31275 Lehrte (DE)
(74) Vertreter: Gramm, Lins & Partner Patent- und Rechtsanwälte PartGmbB

(56) Entgegenhaltungen:
- EP-A1- 3 431 840
- DD-A1- 205 226
- DE-A1- 3 317 018
- GB-A- 782 851
- US-A- 3 583 426
- US-A- 3 945 395
- US-A- 4 815 699

## Beschreibung

Die Erfindung betrifft ein Ventil mit einem Ventilsitz und einem Ventilteller, der in eine erste Position, in der er mit dem Ventilsitz in Kontakt ist und das Ventil geschlossen ist, und in eine zweite Position bringbar ist, in der das Ventil geöffnet ist, wobei das Ventil wenigstens ein Federelement aufweist und der Ventilsitz gegen eine von dem wenigstens einen Federelement aufgebrachte Kraft verschiebbar ist, indem der Ventilteller aus der zweiten Position in die erste Position gebracht wird und dabei das Federelement verformt, wobei der Ventilteller aus der zweiten Position soweit in die erste Position verschoben wird, bis die vom Federelement aufgebrachte Kraft der vom Ventilsitz aufgebrachten Kraft entspricht.

Derartige Ventile sind beispielsweise aus der US 4 815 699, der EP 3 431 840 A1, der GB 782 851 A, der DE33 17 018 A1 und der DD 205 226 A1 bekannt.

Derartige Ventile werden in unterschiedlichen Größen und für unterschiedliche Anwendungsfälle und Einsatzarten hergestellt und sind seit langem aus dem Stand der Technik bekannt. Der Ventilteller kann aus der zweiten Position, in der das Ventil geöffnet ist, in die erste Position verschoben werden, indem er auf den Ventilsitz zu bewegt wird. Wenn er mit dem Ventilsitz in Kontakt kommt schließt das Ventil. Um den Ventilteller von der ersten Position, also dem geschlossenen Ventil, in die zweite Position zu bringen, wird er in die entgegengesetzte Richtung verschoben, also vom Ventilsitz weg bewegt.

Derartige Ventile werden beispielsweise bei Speicherbehältern, beispielsweise Tanks, oder Leitungen, wie beispielsweise Pipelines, und dafür notwendigen Armaturen und Anbauten verwendet, in denen ein Fluid, beispielsweise eine Flüssigkeit oder ein Gas, gespeichert wird oder durch die ein derartiges Fluid hindurchgeleitet wird. Durch ein solches Ventil kann die Durchflussmenge, die beispielsweise durch die Leitung hindurchgeleitet wird oder die durch das Ventil in den Speicherbehälter eingelassen oder aus ihm abgelassen wird, eingestellt und beeinflusst werden. So können derartige Ventile insbesondere als Notventile verwendet werden, um beispielsweise den Abfluss des Fluids aus einem Behälter oder Tank zu stoppen, wenn beispielsweise in einer angeschlossenen Leitung ein Defekt oder ein technisches Problem vorliegt. In diesem Fall wird das Ventil, das sich herkömmlicherweise in der geöffneten Stellung befindet, in der sich der Ventilteller in der zweiten Position befindet, geschlossen. Dazu wird der Ventilteller aus der zweiten Position in die erste Position gebracht.

In dieser aber auch in anderen Anwendungen ist es wichtig, dass möglichst wenig, optimalerweise kein Fluid durch das Ventil hindurchtreten kann, wenn sich der Ventilteller in der ersten Position befindet. Es ist also von Vorteil, einen für das jeweilige Fluid möglichst dichtenden Kontakt zwischen dem Ventilteller und dem Ventilsitz herzustellen.

In vielen Anwendungen ist der Ventilsitz mit einem Flansch verbunden, über den zumindest der Ventilsitz, gegebenenfalls jedoch auch das gesamte Ventil an einem weiteren Bauteil, beispielsweise einer Wandlung eines Behälters oder einer Leitung, wie beispielsweise deren Ende, befestigt wird. Ein solcher Flansch ist insbesondere bei großen Ventilen, bei denen der Ventilsitz einen Innendurchmesser von beispielsweise mehr als 15 cm, vorzugsweise 30 cm, vorzugsweise mehr als 40 cm, besonders bevorzugt mehr als 50 cm, beispielsweise 60 cm, aufweist, mit mehreren Schrauben oder Befestigungselement am jeweils anderen Bauteil befestigt. Bei der Montage kann es durch das Anzugsmoment der Schrauben oder Befestigungselemente zu einer Verformung des Flansches kommen, die sich insbesondere für den Fall, dass der Ventilsitz mit dem Flansch direkt, beispielsweise über eine Schweißnaht oder bei einstückig gegossenen Teilen, verbunden ist, auf den Ventilsitz übertragen können. Der Flansch verformt sich, um die Setzungserscheinungen zu kompensieren. Diese Verformungen des Ventilsitzes können die Leckage, also die Menge des Fluides, die im geschlossenen Zustand des Ventils durch das Ventil hindurch treten kann, erhöhen. Die Qualität des Ventils wird dadurch beeinträchtigt.

Aus dem Stand der Technik sind daher Ventile bekannt, bei denen der Ventilteller elastisch und verformbarer ausgebildet ist. Ein solches Ventil des beispielsweise aus der US 3, 394, 732 oder der US 5, 048, 560 bekannt. Alternative Ausführungsformen werden beispielsweise unter dem Begriff "Expanda-Seal" von der Firma "Shand & Jurs" oder der Firma "Pentair" vertrieben.

Dies ist insbesondere dann von Nachteil, wenn das Fluid, dessen Durchfluss verhindert werden soll, beispielsweise giftig, ätzend oder brennbar ist oder sonstige negative Eigenschaften auf die Umgebung und die Umwelt haben kann. Indem sie dies verhindert, leistet die vorliegende Erfindung insbesondere in diesen Fällen einen wertvollen Beitrag zum Umwelt- und Klimaschutz.

Der Erfindung liegt daher die Aufgabe zugrunde, ein Ventil der oben beschriebenen Art so zu verbessern, dass die Dichtwirkung verbessert wird.

Die Erfindung löst die gestellte Aufgabe durch ein Ventil gemäß dem Oberbegriff des Anspruchs 1, das einen Flansch mit Bohrungen aufweist, durch die Schrauben geführt werden können, um das Ventil an einem anderen Bauteil zu befestigen, wobei das Ventil und derart ausgebildet ist, dass eine Verformung des Flansches, die durch Befestigen des Flansches an einem Bauteil hervorgerufen werden, nicht zu einer Verformung des Ventilsitzes führt, wobei die Verformung des Flansches durch das wenigstens eine Federelement kompensiert wird.

Anders als bei Ventilen aus dem Stand der Technik ist der eigentliche Ventilsitz, der mit dem Ventilteller in Kontakt kommt, wenn das Ventil geschlossen wird, relativ zu einem Flansch oder einem anderen Bauteil des Ventils außer dem Ventilteller verschieblich angeordnet. In der geöffneten Position des Ventils, wenn sich also der Ventilteller in der zweiten Position befindet und nicht mit dem Ventilsitz in Kontakt ist, befindet sich der Ventilsitz in seiner Grundposition. In dieser Grundposition ist das wenigstens eine Federelement soweit entspannt, wie es durch die baulichen Gegebenheiten des Ventils möglich ist. In bestimmten Ausführungsformen ist das Federelement vollständig entspannt. Unabhängig davon, ob das Federelement in dieser Position und Situation noch potentielle Energie gespeichert hat, ist es ihm vorzugsweise nicht möglich, weitere potentielle Energie abzugeben und einen noch entspannteren Zustand zu erreichen. Für den Ventilsitz bedeutet dies, dass seine Grundposition die Position ist, in der am weitesten in Richtung auf den Ventilteller verschoben ist. Eine weitere Verschiebung des Ventilsitzes in Richtung auf den Ventilteller ist aus der Grundposition heraus vorzugsweise nicht möglich.

Wird nun aus dieser Position heraus das Ventil geschlossen, also der Ventilteller aus der zweiten Position in die erste Position gebracht, verringert sich der Abstand zwischen dem Ventilteller und dem Ventilsitz kontinuierlich, bis der Ventilteller mit dem Ventilsitz in Kontakt kommt. In diesem Moment ist jedoch die erste Position des Ventilsitzes noch nicht erreicht. Vielmehr wird der Ventilteller weiter verschoben und verschiebt so auch den Ventilsitz, wobei das Federelement mit potentieller Energie aufgeladen wird. Dies bedeutet, die Verschiebung des Ventilsitzes gemeinsam mit dem Ventilteller erfolgt gegen eine Kraft, die von dem wenigstens ein Federelement aufgebracht wird. Wenn der Ventilteller aus der zweiten Position in die erste Position gebracht wird, überwindet er die vom Federelement aufgebrachte Kraft teilweise und verformt das Federelement. Der Ventilteller komprimiert das Federelement dabei vorzugsweise. Dies vom Federelement aufgebrachte Kraft steigt dadurch an. Die Verformung endet, wenn die vom Ventilteller auf den Ventilsitz und damit auch auf das Federelement aufgebrachte Kraft der vom Federelement aufgebrachten Kraft entspricht und sich ein Kräftegleichgewicht einstellt oder eine weitere Verschiebung des Ventiltellers und/oder des Ventilsitzes aufgrund eines Anschlages nicht mehr möglich ist. In diesem Moment ist die erste Position des Ventiltellers erreicht.

Es wird folglich eine Kraft auf den Ventilsitz, die in Richtung auf den Ventilteller gerichtet ist und die auch bei einer Verformung eines Flansches durch Anzugsmomente von Befestigungselementen dafür sorgt, dass ein möglichst guter Kontakt zwischen dem Ventilteller und dem Ventilsitz erreicht wird.

Vorzugsweise weist das Federelement wenigstens ein elastisches Bauteil, beispielsweise aus einer gummielastischen Masse und/oder wenigstens einen Balg, beispielsweise aus einem Kunststoff oder einem Metall, auf. Das Material, das für das Federelement verwendet wird, wird dabei vorzugsweise in Abhängigkeit des Fluides ausgewählt, mit dem das Federelement in Kontakt kommt, wenn das Ventil verwendet wird.

Vorzugsweise verfügt der Ventilsitz über einen Anschlag, an dem der Ventilteller anliegt, wenn der Ventilteller sich in der ersten Position befindet. Ohne einen solchen Anschlag würde der Ventilteller aus der zweite Position, in der das Ventil geöffnet ist, soweit verschoben werden, um das Ventil zu schließen, bis die vom Federelement aufgebrachte Kraft der vom Ventilsitz ausgehenden Kraft, die beispielsweise durch die Gewichtskraft des Ventilsitzes, gegebenenfalls vorhandene Federbelastungen und vor Spannungen, die verwendet werden, um ein möglichst schnelles Schließen des Ventils zu erreichen, und einem vom Fluid ausgeübten Druck bestimmt sind. Diese Kraft kann insbesondere bei großen Ventilteller, sehr groß werden und in diesem Fall ein sehr starkes Federelement erfordern. Diese benötigen in der Regel viel Bauraum und Material und sind daher entsprechend kostenintensiv. Für eine ausreichende Dichtwirkung zwischen dem Ventilsitz und dem Ventilteller ist eine solche große Kraft, die von dem Federelement ausgeübt wird, oftmals nicht notwendig.

In solchen Situationen ist es von Vorteil, wenn der Ventilteller beim Verschieben aus der zweiten Position in die erste Position zwar den Ventilsitz gegen die vom Federelement aufgebrachte Kraft verschiebt, nach einer bestimmten Weglänge jedoch an dem Anschlag anschlägt oder anliegt, der dann eine weitere Verschiebung unterbindet. Der Großteil der vom Ventilteller ausgeübten Kraft wird dann durch den Anschlag abgefangen und abgeleitet und durch das Federelement wird nur eine Kraft ausgeübt, die groß genug ist, um eine ausreichend dicht Wirkung zu erlangen.

Vorzugsweise ist der Anschlag ringförmig ausgebildet. In einer bevorzugten Ausgestaltung ist der Anschlag eine ringförmige Erhöhung oder ein sehr kurzes Rohr, dessen Länge deutlich kleiner als sein Durchmesser ist. Das eine Ende dieses Rohres dient als Anschlagsfläche, an der der Ventilteller anliegt, wenn er sich in der ersten Position befindet. Vorzugsweise ist am gegenüberliegenden zweiten Ende dieses Rohres ein Flansch angeordnet, der radial über den ringförmigen Anschlag hinausragt. An dieser Auskragung verfügt er vorzugsweise über eine Mehrzahl von Bohrungen, die mit Bohrungen an einem anderen Bauteil in Überdeckung gebracht werden können, um den Flansch an dem anderen Bauteil mit Befestigungselementen, beispielsweise Schrauben, zu befestigen.

Vorzugsweise ist das wenigstens eine Federelement ebenfalls ringförmig ausgebildet und an dem Anschlag angeordnet. Auf diese Weise wird sichergestellt, dass über den gesamten Umfang des Anschlages und besonders bevorzugt auch über den gesamten Umfang des Ventilsitzes eine Kraft vom Federelement auf den Ventilsitz ausgeübt wird, wenn sich der Ventilteller in der ersten Position befindet. Alternativ dazu ist das Federelement nicht ringförmig ausgebildet. In diesem Fall verfügt es vorzugsweise über eine Mehrzahl, beispielsweise mindestens 3, mindestens 4, mindestens 6 oder mindestens 16 Einzelelemente, die über den Umfang des Ventilsitzes und/oder über den Umfang des Anschlages verteilt angeordnet sind. Besonders bevorzugt werden die Einzelelemente äquidistant angeordnet.

Vorzugsweise ist das wenigstens eine Federelement radial außen an dem Anschlag angeordnet. Diese Position ist besonders dann von Vorteil, wenn sich das Ventil hauptsächlich im geöffneten Zustand befindet. Das Fluid strömt dann durch den ringförmig ausgebildeten Anschlag und den ringförmigen Ventilsitz hindurch und wird von dem radial außen angeordneten Federelement nicht oder zumindest wenig beeinträchtigt.

Alternativ dazu ist das wenigstens eine Federelement radial innen an dem Anschlag angeordnet. Dies ist immer dann von Vorteil, wenn sich das Ventil hauptsächlich im geschlossenen Zustand befindet. In diesem Zustand fließt optimalerweise kein Fluid durch das Ventil. Aufgrund von Fertigungstoleranzen und Spiel ist ein vollständiges Unterbinden eines solchen Flusses jedoch nicht zu erreichen. Dennoch ist die Menge an Fluid, die in diesem Zustand durch das Ventil hindurchfließt, sehr gering.

Erfindungsgemäß verfügt das Ventil über einen Flansch und ist derart ausgebildet, dass eine Verformung des Flansches, die durch Befestigen des Flansches an einem Bauteil hervorgerufen werden, nicht zu einer Verformung des Ventilsitzes führt. Derartige Verformungen treten dann auf, wenn der Flansch mittels Befestigungselementen, beispielsweise Schrauben, an dem Bauteil, das nicht Teil des Ventils ist, sondern beispielsweise eine Rohrleitung sein kann, montiert wird. Vorzugsweise ist der Flansch kreisförmig oder rechteckig, beispielsweise quadratisch ausgebildet. Selbstverständlich sind auch andere geometrische Formen des Flansches möglich.

Erfindungsgemäß wird die Verformung des Flansches durch das wenigstens eine Federelement kompensiert. Der Flansch und der Ventilsitz sind besonders bevorzugt spannungsentkoppelt ausgebildet.

In einer bevorzugten Ausgestaltung ist die Elastizität des Federelement des höher als die Elastizität des Ventilsitzes. Besonders bevorzugt ist sie wenigstens doppelt so hoch. Vorzugsweise weichen die Elastizität des Ventilsitzes und des Ventiltellers um weniger als 20 %, vorzugsweise weniger als 10 % voneinander ab. Besonders bevorzugt sind die Elastizität des Ventiltellers und des Ventilsitzes gleich groß.

Mithilfe der beigefügten Darstellungen werden nachfolgend einige Ausführungsbeispiele der vorliegenden Erfindung näher erläutert. Es zeigen:
- Figuren 1-8: schematische Schnittdarstellungen durch Ventile unterschiedlicher Ausführungsformen der Erfindung,
- Figur 9: eine schematische Schnittdarstellung durch ein Ventil im montierten Zustand und
- Figur 10: das Ventil aus Figur 1 im geöffneten Zustand.

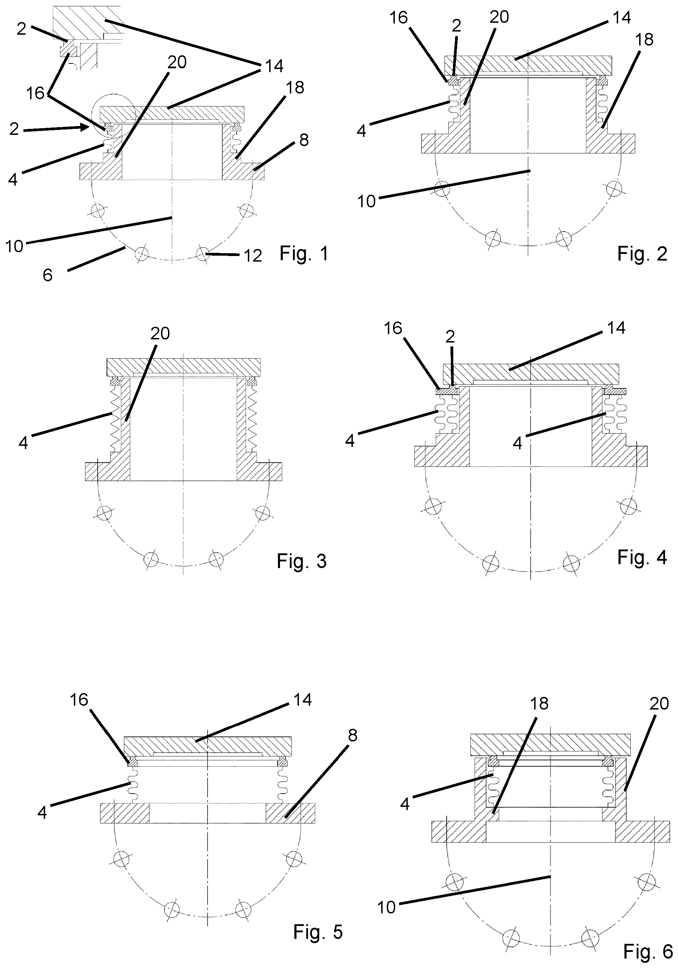

Figuren 1 bis 8 zeigen Schnittdarstellungen durch Ventile gemäß unterschiedlicher Ausführungsformen der Erfindung. Sie alle verfügen über einen Ventilsitz 2, der auf einer Ventilsitzaufnahme 16 dargestellt ist. Die ist in dem kleinen Ausschnitt im oberen linken Bereich der Figur 1, der dem Inhalt des Kreises entspricht, vergrößert dargestellt. Es handelt sich in den gezeigten Ausführungsbeispielen um ein ringförmiges, vorzugsweise kreisringförmiges Element, das eine Durchflussöffnung des Ventils umgibt. Unterhalb der eigentlichen Schnittdarstellungen wird durch den gestrichelt dargestellten Teilkreis 6 illustriert, dass das Ventil und der Ventilsitz 2 rotationssymmetrisch ausgebildet ist. Dies ist zwar von Vorteil, aber nicht notwendig. Es sind auch eckige, beispielsweise rechteckige Ventile bekannt. Am unteren Ende des Ventilsitzes 2 befindet sich ein Flansch 8, der radial bezüglich der Längsachse 10 des Ventils hervorsteht. In dem Teilkreis 6 sind Elemente 12 dargestellt, die illustrieren, dass in bestimmten Abständen der Flansch 8 mit Bohrungen versehen ist, durch die Befestigungselemente, beispielsweise Schrauben, hindurchgeführt werden können, um den Flansch 8 und damit das Ventil an einem anderen Bauteil anzuordnen. Oberhalb des Ventilsitzes 2 befindet sich ein Ventilteller 14, an dem sich eine Ventilsitzaufnahme 16 befindet. An diesem liegt das Federelement 4 an.

Alle diese Bauteile und Elemente sind bei allen Ventilen, die in den Figuren 1 bis 8 dargestellt sind, vorhanden und wirken gleich. Auf eine detaillierte Beschreibung wird daher im Folgenden verzichtet. Stattdessen werden die Unterschiede der einzelnen Ventile beschrieben.

In Figur 1 liegt das obere Ende des Federelementes 4 weist eine Ventilsitzaufnahme 16 auf, der im gezeigten Ausführungsbeispiel am Ventilteller 14 anliegt und so verhindert, dass Fluid in den Ventilsitz 2 eindringen und durch ihn das Ventil verlassen kann. Das Ventil ist im geschlossenen Zustand. Das entgegengesetzte Ende des Federelementes 4 liegt an einer Stufe 18 an, die im gezeigten Ausführungsbeispiel direkt oberhalb des Flansches 8 positioniert ist. Das Federelement 4 ist im in Figur 1 gezeigten Ausführungsbeispiel relativ kurz als Faltenbalg mit einer gewölbten Falte ausgebildet.

Der Ventilsitz 2 verfügt zudem über einen Anschlag 20, der als ringförmiges Element ausgebildet ist. Das Ventil ist in der geschlossenen Position dargestellt, da der Ventilsitz 2, der an der Ventilsitzaufnahme 16 angeordnet ist, am Ventilteller 14 anliegt. Der zwischen dem Ventilteller 14 und dem Anschlag 20 dargestellte kleine Spalt ist nur der besseren Übersichtlichkeit wegen dargestellt.

Das in Figur 2 dargestellt Ventil unterscheidet sich von dem in Figur 2 gezeigten Ventil durch ein anderes Federelement 4. Es liegt auch zwischen der Ventilsitzaufnahme 16, an der der Ventilsitz 2 angeordnet ist, am Ventilteller 14 und an der Stufe 18 an, ist jedoch in axialer Richtung bezüglich der Längsachse 10 länger ausgebildet. Das Federelement 4 ist wieder als Faltenbalg ausgebildet, verfügt nun jedoch über zwei Falten, die gewölbt ausgebildet sind. Das Ventil verfügt auch über einen in axialer Richtung längeren Anschlag. Die Funktionsweise entspricht jedoch der des Ventils aus Figur 1.

Figur 3 zeigt ein Ventil, das im Vergleich zu dem in Figur 2 gezeigten Ventil über einen in axialer Richtung längeren Anschlag 20 und somit auch über ein längeres Federelement 4. Dieses ist anders als in den Figuren 1 und 2 nicht mit gewölbten Falten, sondern mit geknickten Falten ausgebildet. Dadurch verfügt es über eine andere Federwirkung, beispielsweise eine andere Federkennlinie oder Federkonstante, als bei der in den Figuren 1 und 2 gezeigten Ausgestaltung, selbst wenn alle anderen Parameter, wie das verwendete Material, die Dicke und die Länge identisch bleiben.

In Figur 4 ist ein Ventil dargestellt, das über zwei Federelemente 4 verfügt. Diese sind im gezeigten Ausführungsbeispiel konzentrisch zueinander angeordnet. Beide sind mit der Ventilsitzaufnahme 16 verbunden. Der daran angeordnete Ventilsitz 2 liegt in der gezeigten Situation am Ventilteller 14 an und verschließt so das Ventil.

Durch die Verwendung von mehr als einem Federelement 4 ist es besonders einfach möglich, die Federkraft im Vergleich beispielsweise zu der in Figur 1 gezeigten Ausführung des Ventils zu verstärken. Dabei können wie in Figur 4 identische Federelemente oder verschiedene Federelemente verwendet werden.

Figur 5 zeigt eine Schnittdarstellung durch ein Ventil, das keinen Anschlag 20 aufweist. Das Federelement 4 liegt mit dem in Figur 5 unteren Ende an dem Flansch 8 an und verfügt am oberen Ende über die Ventilsitzaufnahme 16, an der der Ventilsitz 2 angeordnet ist, der am Ventilteller 14 anliegt. In dieser Ausgestaltung wird der Ventilteller 14 in der geschlossenen Position so weit nach unten bewegt, bis die auf den Ventilteller 14 wirkende Gewichtskraft, ein gegebenenfalls durch ein Fluid wirkender Druck und die Federkraft des Federelementes 4 ein Kräftegleichgewicht bilden.

In Figur 6 ist ein Ventil dargestellt, das einen Anschlag 20 aufweist. Anders als bei den in den Figuren 1 bis 4 gezeigten Ventilen ragt die Stufe 18, an der das Federelement 4 anliegt nicht nach radial außen, sondern nach radial innen hervor. Das Federelement 4 ist bezüglich der Längsachse 10 des Ventils radial innen angeordnet und verfügt wie bei den anderen gezeigten Ventilen über die Ventilsitzaufnahme 16.

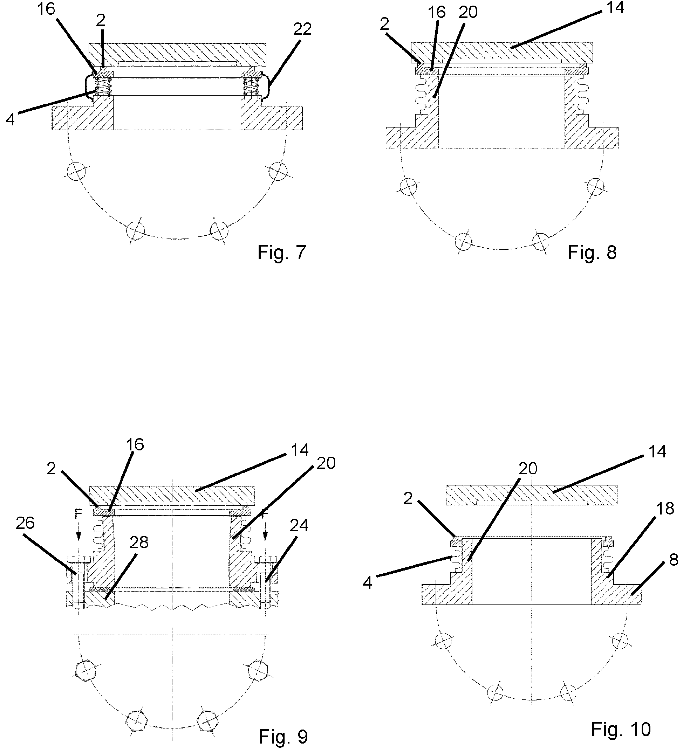

In Figur 7 ist ein Ventil mit einer anderen Art Federelement 4 dargestellt. Anstelle des bisher gezeigten Faltenbalges verfügt das Ventil gemäß Figur 7 über eine Reihe von Schraubenfedern, von denen zwei dargestellt sind. Mehrere dieser Federelemente 4 sind über den Umfang verteilt angeordnet, um die gewünschte Federkraft aufzubringen. Anders als ein Faltenbalg sind derartige Federelemente 4 nicht geeignet, das Ventil gegen ein von außen oder innen anströmendes oder anstehendes Medium oder Fluid abzudichten. Daher ist bezüglich der Längsachse 10 radial außerhalb der Federelemente 4 ein Dichtmantel 22 angeordnet. Dieser kann jedoch auch bezüglich der Längsachse radial innerhalb der Federelemente 4 angeordnet werden.

Das Ventil gemäß Figur 8 unterscheidet sich von den bisher gezeigten Ventilen besonders durch die andere Ventilsitzaufnahme 16. Diese ist bei den bisher dargestellten Ventilen, die einen Anschlag 20 aufweisen, entweder radial innerhalb des Anschlags 20 oder radial außerhalb des Anschlags 20 angeordnet. Im Gegensatz dazu ist der bei dem Ventil gemäß Figur 8 so angeordnet, dass er zwischen dem Anschlag 20 und dem Ventilteller 14 angeordnet ist und mit dem Anschlag 20 in Kontakt kommt, wenn das Ventil geschlossen ist und der Ventilsitz 2, der an der Ventilsitzaufnahme angeordnet ist, mit dem Ventilteller 14 in Kontakt ist.

Figur 9 zeigt eine schematische Schnittdarstellung durch das Ventil gemäß Figur 8 im montierten Zustand. Durch die Bohrungen 24 im Flansch 8 sind Schrauben 26 geführt, um das Ventil an einem anderen Bauteil 28 zu befestigen. Dabei werden die Schrauben 26 angezogen und es kommt zu einer Verformung des Anschlages 20, die zur besseren Erkennbarkeit übertrieben und nicht maßstabsgetreu dargestellt ist. Wäre die Dichtwirkung des Ventils davon abhängig, wie gut der Kontakt zwischen dem Anschlag 20 und dem Ventilteller 14 ist, würde diese Verformung zu einer Leckage führen und die Dichtwirkung des Ventils beeinträchtigen. Die Ventilsitzaufnahme 16 und damit auch der daran angeordnete Ventilsitz 2hingegen werden durch die beim Festziehen der Schrauben 26 nicht verformt. Sein Kontakt mit dem Ventilteller 14 ist für die Dichtheit des Ventils entscheidend und wird nicht beeinträchtigt.

Figur 10 zeigt das Ventil aus Figur 1 im geöffneten Zustand. Der Ventilteller 14 ist vom Ventilsitz 2 entfernt worden, also von der ersten Position, die in Figur 1 dargestellt ist, in die zweite Position gebracht worden.

### Bezugszeichenliste:

- 2: Ventilsitz
- 4: Federelement
- 6: Teilkreis
- 8: Flansch
- 10: Längsachse
- 12: Element
- 14: Ventilteller
- 16: Ventilsitzaufnahme
- 18: Stufe
- 20: Anschlag
- 22: Dichtmantel
- 24: Bohrung
- 26: Schraube
- 28: Bauteil

## Patentansprüche

1. Ventil mit
- einem Ventilsitz (2) und
- einem Ventilteller (14), der in eine erste Position, in der er mit dem Ventilsitz (2) in Kontakt ist und das Ventil geschlossen ist, und in eine zweite Position bringbar ist, in der das Ventil geöffnet ist, wobei
das Ventil wenigstens ein Federelement (4) aufweist und der Ventilsitz (2) gegen eine von dem wenigstens einen Federelement (4) aufgebrachte Kraft verschiebbar ist, indem der Ventilteller (14) aus der zweiten Position in die erste Position gebracht wird und dabei das Federelement (4) verformt, wobei der Ventilteller (14) aus der zweiten Position soweit in die erste Position verschoben wird, bis die vom Federelement (4) aufgebrachte Kraft der vom Ventilsitz (2) aufgebrachten Kraft entspricht, **dadurch gekennzeichnet, dass** das Ventil einen Flansch (8) mit Bohrungen (24) aufweist, durch die Schrauben (26) geführt werden können, um das Ventil an einem anderen Bauteil (28) zu befestigen, wobei das Ventil derart ausgebildet ist, dass eine Verformung des Flansches (8), die durch Befestigen des Flansches (8) an dem anderen Bauteil (28) hervorgerufen wird, nicht zu einer Verformung des Ventilsitzes führt, wobei die Verformung des Flansches (8) durch das wenigstens eine Federelement (4) kompensiert wird.

2. Ventil nach Anspruch 1, **dadurch gekennzeichnet, dass** das Federelement (4) wenigstens ein elastisches Bauteil, beispielsweise aus einer gummielastischen Masse und/oder wenigstens einen Balg, beispielsweise aus einem Kunststoff oder einem Metall aufweist.

3. Ventil nach Anspruch 1 oder 2, **dadurch gekennzeichnet, dass** der Ventilsitz (2) einen Anschlag (20) aufweist, an dem der Ventilteller (14) anliegt, wenn der Ventilteller (14) sich in der ersten Position befindet.

4. Ventil nach Anspruch 3, **dadurch gekennzeichnet, dass** der Anschlag (20) ringförmig ausgebildet ist.

5. Ventil nach Anspruch 4, **dadurch gekennzeichnet, dass** wenigstens ein Federelement (4) radial außen an dem Anschlag (20) angeordnet ist.

6. Ventil nach Anspruch 4 oder 5, **dadurch gekennzeichnet, dass** wenigstens ein Federelement (4) radial innen an dem Anschlag angeordnet ist.

7. Ventil nach einem der vorstehenden Ansprüche, **dadurch gekennzeichnet, dass** der Flansch (8) kreisförmig oder rechteckig ausgebildet ist.

8. Ventil nach einem der vorstehenden Ansprüche, **dadurch gekennzeichnet, dass** die Elastizität des Federelementes (4) höher als, vorzugsweise wenigstens doppelt so hoch wie, die Elastizität des Ventilsitzes (2) ist.

9. Ventil nach einem der vorstehenden Ansprüche, **dadurch gekennzeichnet, dass** die Elastizität des Ventilsitzes (2) und die Elastizität des Ventiltellers (14) um weniger als 20 %, vorzugsweise weniger als 10 % voneinander abweichen, besonders bevorzugt gleich groß sind.

## Claims

1. A valve with
- a valve seat (2) and
- a valve disk (14), which can be brought into a first position is in contact with the valve seat (2) and the valve is closed, and into a second position in which the valve is open, wherein
the valve comprises at least one spring element (4) and the valve seat (2) can be displaced against a force exerted by the at least one spring element (4) by bringing the valve disk (14) from the second position into the first position and thereby deforming the spring element (4), wherein the valve disk (14) is displaced from the second position into the first position until the force applied by the spring element (4) corresponds to the force applied by the valve seat (2),
**characterized in that** the valve has a flange (8) with bores (24) through which screws (26) can be passed in order to fasten the valve to another component (28), the valve being designed such that a deformation of the flange (8), which is caused by fixing the flange (8) to the other component (28), does not lead to a deformation of the valve seat, the deformation of the flange (8) being compensated for by the at least one spring element (4).

2. The valve according to claim 1, **characterized in that** the spring element (4) comprises at least one elastic component, for example made of a rubber-elastic compound, and/or at least one bellows, for example made of a plastic or a metal.

3. The valve according to claim 1 or 2, **characterized in that** the valve seat (2) has an end stop (20) on which the valve disk (14) rests when the valve disk (14) is in the first position.

4. The valve according to claim 3, **characterized in that** the end stop (20) is designed to be ring-shaped.

5. The valve according to claim 4, **characterized in that** the at least one spring element (4) is arranged radially outside on the end stop (20).

6. The valve according to claim 4 or 5, **characterized in that** the at least one spring element (4) is arranged radially inside on the end stop.

7. The valve according to one of the preceding claims, **characterized in that** the flange (8) being designed to be circular or rectangular.

8. The valve according to one of the preceding claims, **characterized in that** the elasticity of the spring element (4) is higher, preferably at least twice as high, as the elasticity of the valve seat (2).

9. The valve according to one of the preceding claims, **characterized in that** the elasticity of the valve seat (2) and the elasticity of the valve disk (14) deviate from each other by less than 20%, preferably less than 10%; particularly preferably, they are equal.

## Revendications

1. Soupape, comprenant
- un siège de soupape (2) et
- une tête de soupape (14) qui peut être amenée dans une première position, dans laquelle elle est en contact avec le siège de soupape (2) et la soupape est fermée, et dans une deuxième position, dans laquelle la soupape est ouverte,
dans laquelle
la soupape comprend au moins un élément élastique (4) et le siège de soupape (2) peut être déplacé à l'encontre d'une force exercée par ledit au moins un élément élastique (4) du fait que la tête de soupape (14) est amenée de la deuxième position vers la première position tout en déformant l'élément élastique (4),
la tête de soupape (14) est déplacée de la deuxième position vers la première position jusqu'à ce que la force exercée par l'élément élastique (4) corresponde à la force exercée par le siège de soupape (2),
**caractérisée en ce que**
la soupape comprend une bride (8) ayant des perçages (24) à travers lesquels des vis (26) peuvent être passées pour fixer la soupape à un autre composant (28), la soupape étant conçue de telle sorte qu'une déformation de la bride (8) provoquée par la fixation de la bride (8) à l'autre composant (28) n'entraîne pas une déformation du siège de soupape, la déformation de la bride (8) étant compensée par ledit au moins un élément élastique (4).

2. Soupape selon la revendication 1,
**caractérisée en ce que** l'élément élastique (4) comprend au moins un composant élastique réalisé par exemple en une masse présentant l'élasticité du caoutchouc, et/ou au moins un soufflet réalisé par exemple en une matière plastique ou en un métal.

3. Soupape selon la revendication 1 ou 2,
**caractérisée en ce que** le siège de soupape (2) présente une butée (20) contre laquelle la tête de soupape (14) s'appuie lorsque la tête de soupape (14) se trouve dans la première position.

4. Soupape selon la revendication 3,
**caractérisée en ce que** la butée (20) est de forme annulaire.

5. Soupape selon la revendication 4,
**caractérisée en ce qu'**au moins un élément élastique (4) est disposé radialement à l'extérieur sur la butée (20).

6. Soupape selon la revendication 4 ou 5,
**caractérisée en ce qu'**au moins un élément élastique (4) est disposé radialement à l'intérieur sur la butée.

7. Soupape selon l'une des revendications précédentes,
**caractérisée en ce que** la bride (8) est de forme circulaire ou rectangulaire.

8. Soupape selon l'une des revendications précédentes,
**caractérisée en ce que** l'élasticité de l'élément élastique (4) est supérieure, de préférence au moins deux fois supérieure, à l'élasticité du siège de soupape (2).

9. Soupape selon l'une des revendications précédentes,
**caractérisée en ce que** l'élasticité du siège de soupape (2) et l'élasticité de la tête de soupape (14) diffèrent de moins de 20 %, de préférence de moins de 10 %, et, de manière particulièrement préférée, sont identiques.
